# FASCICULE DE BREVET EUROPEEN

(11) **EP 0 430 828 B1**
(45) Date de publication et mention de la délivrance du brevet: **24.01.1996**
(21) Numéro de dépôt: 90420503.6
(22) Date de dépôt: 20.11.1990
(51) Int. Cl.: C08G 63/695

(54) **Copolyesters sulfonés à motifs siloxanes**
Sulphonierte Copolyester mit Siloxaneinheiten
Sulphonated copolyesters having siloxane units

(30) Priorité: 21.11.1989 FR 8915531
(43) Date de publication de la demande: 05.06.1991
(73) Titulaire: RHONE-POULENC CHIMIE, F-92408 Courbevoie Cédex (FR)
(72) Inventeur: Fleury, Etienne, F-69540 Irigny (FR); Michaud, Philippe, F-69006 Lyon (FR); Vovelle, Louis, F-69004 Lyon (FR)
(74) Mandataire: Fabre, Madeleine-France

(56) Documents cités:
- EP-A- 0 118 388
- EP-A- 0 175 092
- GB-A- 2 170 814
- US-A- 4 937 277
- WPIL, FILE SUPPLIER, AN=86-050867, Derwent Publications Ltd, Londres, GB; & JP-A-61 012 914 (NIPPON ESTER K.K.)
- WPIL, FILE SUPPLIER, AN=83-62066k, Derwent Publications Ltd, Londres, GB; & JP-A-58 083 332 (HITACHI)

## Description

La présente invention a pour objet des copolyesters dispersables dans l'eau à groupes oxysulfonyles et à motifs siloxanes qui peuvent être utilisés notamment pour le revêtement d'objets conformés à base de polyesters linéaires, tels que les films et les fibres.

On connaît des copolyesters linéaires à groupes oxysulfonyles à motifs siloxanes utilisables pour l'obtention de fibres à affinité tinctoriale améliorées vis-à-vis des colorants basiques. De tels copolyesters ont été décrits dans la demande de brevet japonais publiée sous le n° 61/124 625. Ils sont caractérisés par la présence dans leurs chaînes de 0,5 à 2 moles %, rapporté au total des motifs acides dicarboxyliques non sulfonés et non siliconés, de motifs sulfo-5 isophtalates et par une teneur pondérale en motifs polysiloxanes comprise entre 1 et 20 %. Les motifs polysiloxanes sont introduits dans la chaîne du copolyester à partir de polysiloxanediols ou de composés (éthers, esters) libérant des polysiloxa- nediols lors du processus d'obtention des copolyesters.

L'industrie cherche, pour des applications diverses, à modifier les propriétés de surface des polyesters linéaires, sans perdre le bénéfice de leurs excellentes propriétés physiques, mécaniques et chimiques. Ainsi, dans le domaine des films polyester, on cherche à modifier les propriétés de surface du film sans modifier la structure du polyester qui le constitue de façon à conserver ses propriétés mécaniques. En particulier, on cherche à conférer à des films polyester destinés à la fabrication de bandes magnétiques de bonnes propriétés de glissant sans modification de la structure chimique du polyester. Un des moyens qui permet d'atteindre un tel objectif réside dans le dépôt à la surface des films d'un revêtement susceptible de lui conférer de nouvelles propriétés de surface. Ce revêtement doit répondre à diverses exigences, notamment en ce qui concerne sa facilité de mise en oeuvre, sa stabilité thermique dans les conditions d'obtention des films, son adhérence aux films polyester.

Les compositions aqueuses de revêtement (émulsions, suspensions ou solutions) sont particulièrement recherchées. Les copolyesters à groupes oxysulfonyles et à motifs polysiloxanes décrits dans la demande de brevet japonais précitée ne répondent pas aux exigences relevées ci-avant, de sorte que l'industrie est à la recherche de polymères susceptibles d'être déposés à la surface des films polyester sous forme de compositions aqueuses, présentant une bonne adhérence aux films polyester support, stables thermiquement dans les conditions de filmature et conférant aux dits films polyester support de bonnes propriétés de glissant. La présente invention a précisément pour objet des copolyesters sulfonées à motifs siloxanes qui répondent à ces diverses exigences.

Plus spécifiquement, la présente invention a pour objet des copolyesters linéaires dispersables dans l'eau dérivés d'au moins un acide dicarboxylique et d'au moins un diol aliphatique et comportant une pluralité de motifs récurrents à groupes oxysulfonyles et de motifs siloxanes caractérisés en ce que :
a) le nombre de motifs récurrents à groupes oxysulfonyles est d'au moins 7, par rapport à 100 motifs recurrents dérivés d'acides dicarboxyliques non sulfonés et non siliconés lorsque les motifs récurrents à groupes oxysulfonyles dérivent d'acides dicarboxyliques à groupes oxysulfonyles, ou par rapport à 100 motifs récurrents dérivés de diols non sulfonés et non siliconés lorsque les motifs récurrents à groupes oxysulfonyles dérivent de diols à groupes oxysulfonyles.
b) les motifs siloxanes répondent à la formule générale : 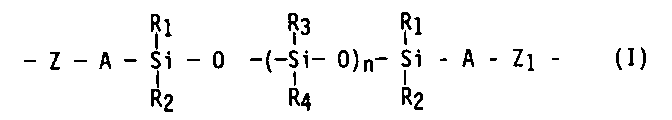
dans laquelle :
. R₁, R₂, R₃, R₄, identiques ou différents, représentent des radicaux alkyles, cycloalkyles, arylalkyles
. A est un radical hydrocarboné divalent lié à l'atome de silicium vicinal par une liaison carbone-silicium, exempt d'insaturation aliphatique et pouvant comporter un hétéro-atome pris dans le groupe formé par 0, Si, N.
   . Z et Z₁ identiques ou différentes représentent les groupes
      fonctionnels divalents 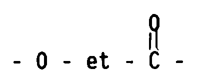
   . n est un nombre entier ou fractionnaire compris entre 5 et 200.

Par groupe oxysulfonyle, on désigne au titre de la présente invention des groupes de formule générale :

- (SO₃)n1 M (II)

dans laquelle :
. n1 est égal à 1 ou 2
. M représente un atome d'hydrogène, un métal alcalin ou alcalinoterreux, un cation ammonium ou ammonium quaternaire.

Les copolyesters à groupes oxysulfonyles et à motifs siloxanes selon la présente invention seront dénommés par la suite copolyesters sulfonés siliconés pour raison de commodité. Ils sont obtenus selon les procédés usuels de préparation des polyesters linéaires à partir d'au moins un acide dicarboxylique ou de ses dérivés (esters d'alcools aliphatiques inférieurs, halogénures), d'au moins un diol, d'au moins un acide dicarboxylique et/ou un diol portant un ou plusieurs groupes oxysulfonyles et d'au moins un composé difonctionnel (diacide, diol, acide-alcool) à motifs siloxanes. Au titre de la présente invention, on désignera, par la suite, par alcool inférieur et par radical aliphatique ou alkoxy inférieur des alcools et des radicaux comportant de 1 à 4 atomes de carbone.

Les acides dicarboxyliques auxquels on peut faire appel pour obtenir les copolyesters sulfonés siliconés selon la présente invention peuvent être des diacides aliphatiques saturés comportant de 4 à 15 atomes de carbone tels que les acides adipique, succinique, sébacique, azélaïque, glutarique ou subérique ou des diacides aromatiques tels que les acides habituellement utilisés pour la préparation des polyesters linéaires ; à ce titre, on peut citer, comme exemples non limitatifs, les acides téréphtalique, isophtalique, phtalique, naphtalènedicarboxylique-2,5, naphtalénedicarboxylique-2,7, diphényldicarboxylique-4,4', la bis-hydroxycarbonyl-4,4' diphénylsulfone.

Parmi ces diacides, on fait appel de préférence aux diacides aromatiques seuls ou en mélange entre eux ou associés à une quantité mineure d'un ou plusieurs acides alcanedicarboxyliques, les acides dicarboxyliques aromatiques représentant de préférence au moins 80 % en moles du total des diacides exempts de groupes oxysulfonyles. Les acides téréphtalique et/ou isophtalique conviennent tout particulièrement bien.

Les diols qui peuvent être utilisés pour la préparation des copolyesters selon l'invention, sont ceux habituellement mis en oeuvre pour l'obtention des polyesters linéaires. On peut citer, à titre d'exemples, des alcanediols tels que l'éthylèneglycol, le propanediol-1,3 , le butanediol-1,4, le butanediol- 1,3, le dimétyl-2,2 propanediol -1,3, le pentanediol-1,5 , des polyoxylalkylènediols tels que les di-, tri-, tétra-, décaoxyéthylèneglycols, des cycloalcane-diols, des diols à groupes cycloalkylènes tels que le cyclohexanediméthanol-4,4'. Ces diols peuvent être utilisés seuls ou en mélange. On fait appel de préférence aux alcanediols inférieurs seuls ou en mélange entre eux et éventuellement associés à des diols plus condensés en carbone tels que le néopentylglycol, le cyclohexanediméthanol et les polyoxyéthylène glycols. La présence dans la chaîne des copolyesters selon l'invention de motifs dérivés de polyoxyalkylèneglycols, de formule Ho [(CH_{2) x O] H n2} dans laquelle x est un nombre entier de 2 à 4 et n2 un nombre entier de 2 à 10 et en particulier de ceux de formule H0 (CH₂CH₂ - 0) n₂H- se révèle avantageuse pour abaisser leur viscoélasticité. Lorsqu'on fait appel, comme diols exempts de groupes oxysulfonyles et/ou de motifs siloxanes, à un mélange d'alcanediols inférieurs et de diols plus condensés en carbone, les premiers représentent de préférence au moins 50 % en moles du total du mélange des dits diols. De préférence les copolyesters selon l'invention comportent au moins 80 % en moles de motifs téréphtalate, isophtalate ou naphtalènedicarboxylate d'éthylèneglycol rapportés à 100 moles de motifs dérivés de diols.

Les groupes oxysulfonyles de formule (II) sont introduits dans le polyester par l'intermédiaire d'un composé difonctionnel à groupe oxysulfonyle, susceptible de réagir avec les diacides et/ou les diols au cours de la polycondensation.

Des exemples de tels monomères sont cités dans le brevet français n° 1 602.002. A cet effet, on peut utiliser des acides dicarboxyliques ou des diols comportant un ou plusieurs groupes oxysulfonyles, de préférence, sous forme de sels alcalins.

On fait appel, plus préférentiellement, à des acides dicarboxyliques à groupes oxysulfonyles et en particulier à des diacides de formule générale : 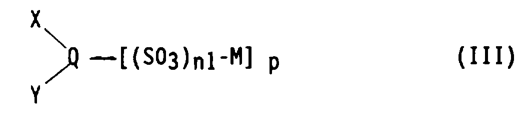 dans laquelle :
- M et n₁ ont la signification déjà donnée ;
- Q est un radical aromatique polyvalent ;
- X et Y sont des radicaux hydroxycarbonyle ou dérivés : esters d'alcools aliphatiques inférieurs ou halogénures d'acides (chlorure, bromure) ;
- p est un nombre entier égal à 1 ou 2.

Dans la formule (III), Q représente plus spécifiquement un radical phényle ou une combinaison de 2 ou plus de 2 radicaux phényles ortho ou péricondensés ou de deux ou plusieurs groupes phényles liés entre eux par des groupes inertes tels que des radicaux alkylidènes (propylidène) ou des groupes éther, cétone, sulfone.

Comme exemples spécifiques d'acides dicarboxyliques à groupes oxysulfonyles, on peut citer les acides hydroxysulfonyltéréphtaliques ; hydroxysulfonylisophtaliques (en particulier, l'acide sulfo-5 isophalique) ; hydroxysulfonylorthophtaliques ; hydroxysulfonyl-4, naphtalène-dicarboxylique-2,7 ; hydroxysulfonyldiphényl-dicarboxylique-4,4' ; les hydroxysulfonyl di-hydroxycarbonyl-4,4' diphénylsulfones ; les hydroxysulfonyldihydroxycarbonyl-4,4'diphénylméthanes ; l'acide (hydroxysulfonylphénoxy)- 5 isophtalique, l'acide (hydroxysulfonylpropoxy)- 5 isophtalique.

Pour l'obtention des copolyesters sulfonés les acides dicarboxyliques à groupes oxysulfonyles peuvent être utilisés sous leur forme acide ou, de préférence sous forme de leurs dérivés (halogénures ou esters d'alkyle inférieurs) capables de générer des polyesters. On fait appel de préférence aux diesters méthyliques. Le ou les groupes sulfo- niques du diacide ou de ses dérivés est (sont) de préférence sous forme de sels alcalins.

Les motifs siloxanes sont introduits dans la chaîne des copolyesters selon l'invention par un composé difonctionnel à motifs siloxanes capables de réagir avec les diols et/ou les acides dicarboxyliques, ou leurs dérivés, mis en oeuvre pour l'obtention des copolyesters. Plus spécifiquement on fait appel à des composés difonctionnels de formule générale : 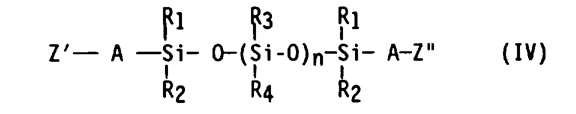 Dans laquelle :
- R₁, R₂, R₃, R₄, A et n ont la signification donnée précédemment ;
- Z' et Z", identiques ou différents, représentent un groupe hydroxyle, un groupe hydroxycarbonyle, un groupe alkoxycarbonyle inférieur, un groupe halogénocarbonyle (chloro ou bromo).

Plus spécifiquement dans les formules I et IV, les différents symboles :
. R1, R₂, R₃, R₄ représentent des radicaux alkyles linéaires ou ramifiés comportant de 1 à 16 atomes de carbone tels que les radicaux méthyle ; éthyle ; n-propyle ; isopropyle ; n-butyle ; isobutyle ; n-pentyle ; éthyl-2 hexyle ; n-décyle ; des radicaux cycloalkyles comportant de 5 à 15 atomes de carbone tels que les radicaux cyclopentyle, cyclohexyle ; des radicaux arylalkyles dans lesquels la partie alkyle comporte de 1 à 15 atomes de carbone, tels que phényl-2 éthyle.
. A représente des radicaux alkylènes comportant de 1 à 15 atomes de carbone tels que les radicaux méthylène ; éthylène ; éthylidène ; propylène-1,3 ; butylène-1,4 ; α-méthylpropylène-1,3 pentylène-1,5 ; hexaméthylène, décaméthylène ; des radicaux constitués par un enchaînement d'un ou plusieurs radicaux arylènes (o, m ou p -phénylène éventuellement substitué par un ou plusieurs radicaux alkyles inférieurs) et d'un ou plusieurs radicaux alkylènes comportant de 1 à 15 atomes de carbone tels que ceux précités ; à ce titre, on peut citer, à titre d'exemple, des groupes de formules : 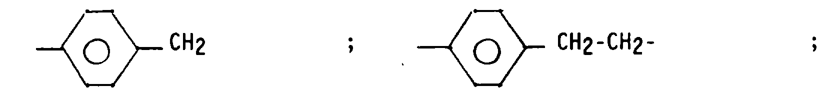 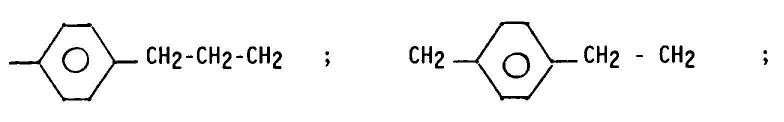
   - des radicaux arylènes constitués par un ou plusieurs radicaux phényles ortho ou péricondensés tels que les radicaux phénylène, diphénylène, naphtylène, éventuellement substituées par un ou plusieurs radicaux alkyles inférieurs.
   - des radicaux alkylènes, arylène-alkylène ou polyarylène comportant un ou plusieurs hétéroatomes pris dans le groupe de l'oxygène et du silicium, tels que les groupes polyoxalkylènes de formule générale :

      [- O (CH₂)ₓ₁-]ₙ₂

      dans laquelle x1 est un nombre entier de 1 à 4 et n₂ un nombre entier supérieur à 2 et de préférence de 2 à 10 ; les radicaux phénylèneoxyéthylène, phénylèneoxypropylène, les radicaux de formule :
      - O - Si - (CH₂)_{y} dans laquelle y est un nombre entier de 1 à 10 et de préférence de 1 à 4.
. n représente un nombre entier ou fractionnaire compris entre 8 et 100 et de préférence entre 10 et 80.

Comme exemples spécifiques de composés difonctionnels de formule (IV), on peut citer, à titre non limitatif, les composés de formule :

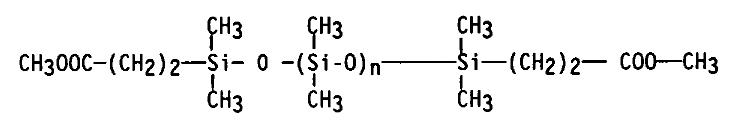

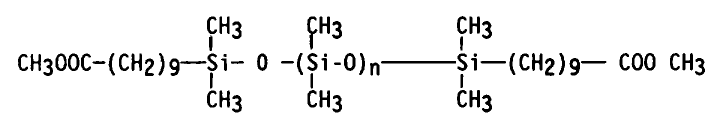

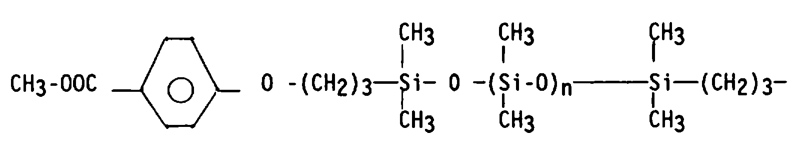

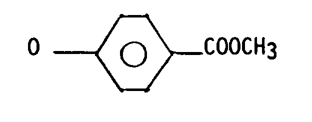

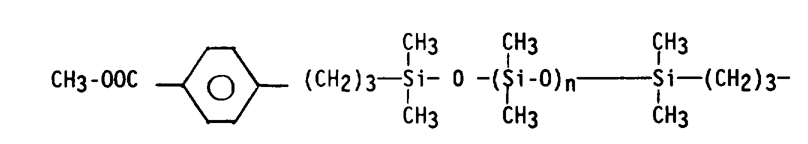

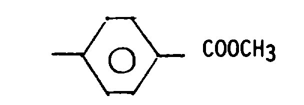

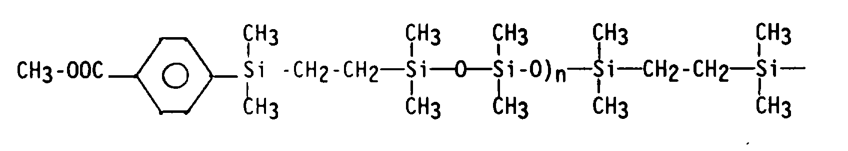

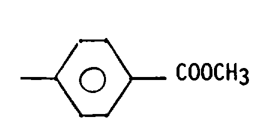

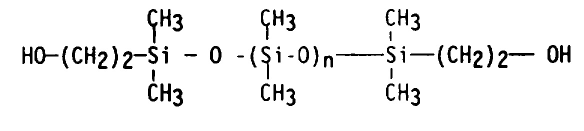

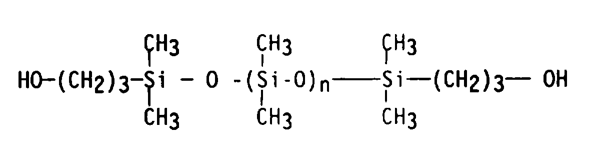

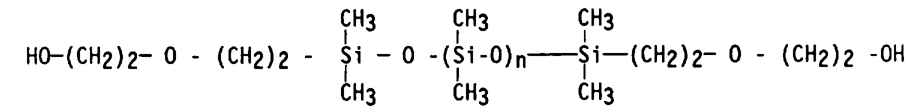

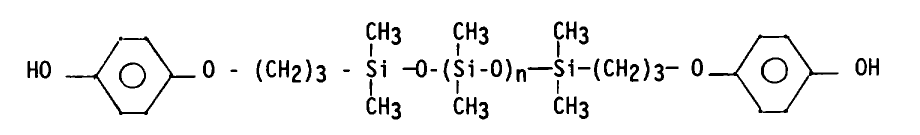

Les composés difonctionnels de formules (IV) sont des produits connus qui peuvent être préparés par les voies usuelles de synthèse des composés organosiliciques. On peut, par exemple, faire réagir un composé à motifs siloxanes et à groupes hydrogénosilyles terminaux avec un composé organique fonctionnel à insaturation éthylénique, en présence de platine ou encore mettre en contact un organo dialkylmonochlorosilane à groupe fonctionnel avec un polysiloxanediol ou ses dérivés éthers d'alkyle inférieur.

Les copolyesters sulfonés à motifs siloxanes selon l'invention peuvent être obtenus par les procédés usuels d'obtention des polyesters linéaires connus de l'homme de métier. De façon générale, dans une première étape, on fait réagir un ou plusieurs acides dicarboxyliques ou dérivés (esters, d'alkyle inférieur, halogènures), au moins un diol, au moins un composé difonctionnel à groupe(s) oxysulfonyle(s) et au moins un composé de formule(IV) en présence des catalyseurs usuels d'estérification ou de transestérifications puis, dans une deuxième étape, on procède à la polycondensation en présence des catalyseurs usuels.

Les conditions de température et de pression sont celles généralement mises en oeuvre pour chacune des deux étapes, ainsi la première étape peut être conduite à une température comprise entre 150 et 250°C environ et la seconde entre 210 et 280°C, les sous-produits de la réaction étant éliminés en continu par distillation sous pression réduite ; de préférence la première et la seconde étape sont conduites à des températures comprises respectivement entre 180 et 200°C et entre 220 et 250°C. Selon une variante, il est possible de préparer un prépolymère exempt de motifs siloxanes et présentant, selon les cas, des groupes hydroxy, hydroxy-ou alkoxycarbonyles terminaux puis de le faire réagir avec un composé difonctionnel à motif siloxane pour obtenir un copolyester à blocs.

Les quantités respectives des divers monomères constitutifs du copolyester final mises en oeuvre dépendent des propriétés désirées pour ce dernier.D'une façon générale, la quantité de composé difonctionnel à groupe oxysulfonyle, exprimée en moles pour 100 moles de composé difonctionnel non sulfoné et non siliconé de même nature doit être suffisante pour conférer au copolyester final un caractère hydrophile tel qu'il puisse être aisément dispersé dans l'eau en donnant des suspensions aqueuses stables.

La quantité de monomère à groupe oxysulfonyle est comprise entre 7 et 20 %.

La quantité de composé difonctionnel à motifs siloxanes dépend de la teneur en silicium désirée pour le polymère final, ex-primée en pourcentage pondéral de silicium par rapport au copolyester sulfoné siliconé. La teneur en silicium est déterminée en fonction des propriétés recherchés pour le polymère final et en particulier de ses propriétés physicochimiques de surface. En général, on cherche à introduire de 0,05 à 5 % en poids de silicium dans le copolyester et, de préférence de 0,1 à 2,5 % en poids. La quantité de monomères difonctionnels à motifs siloxanes mise en oeuvre pour atteindre cet objectif doit également tenir compte du taux de transformation dudit monomère et/ou de réactions secondaires qui sont variables selon les conditions de réaction. Cette quantité peut être aisément déterminée dans chaque cas particulier au moyen d'essais simples. En général, il est avantageux de mettre en oeuvre un excès de composé difonctionnel à motifs siloxanes par rapport à la quantité stoéchiométrique théoriquement nécessaire pour atteindre le taux de silicium désiré.

La quantité totale de diols : alkylèneglycol et le cas échéant diol à groupes(s) oxysulfonyle(s) et/ou diol à motifs siloxanes, est au moins voisine de la quantité stoéchiométrique, c'est-à-dire voisine de 1 mole de diols par mole de diacide(s) ; on préfère cependant mettre en oeuvre un excès de diol(s) par rapport au(x) diacide(s). De préférence, la quantité d'alkylènediol(s) mise en oeuvre est comprise entre 1,5 et 3 moles par mole de diacide(s).

Parmi les copolyesters de la présente invention, ceux qui présentent dans leur chaîne une pluralité de motifs polyoxylkylène, et plus particulièrement de motifs polyoxyéthyne de formule : -[O - CH₂ - CH₂]ⁿ² - dans laquelle ⁿ² est un nombre entier compris entre 2 et 10, sont particulièrement avantageux. En effet, la présence de tels motifs permet de modifier les propriétés viscoélastiques du copolyester et par conséquent d'influer favorablement sur les propriétés d'adhérence de revêtements à base des copolyesters selon l'invention à des polyesters linéaires usuels.

Les copolyesters sulfonés siliconés, objets de la présente demande, peuvent donc préférentiellement contenir une quantité efficace d'un polyoxyalkylènediol et notamment d'un polyoxyéthylèneglycol pour en modifier les propriétés viscoélastiques. En général, une quantité de polyoxyalkylènediol représentant de 1% en poids à 40% en poids de copolyester et, de préférence de 5% en poids à 25% en poids, convient bien. L'introduction de motifs polyoxyalkylènediol dans la chaine des copolyesters sulfonés siliconés peut être obtenue par la mise en oeuvre d'une quantité adéquate d'un polyoxalkylènediol préformé ou bien par sa formation in situ à partir d'un alkylèneglycol grâce au choix des conditions de réaction et de polycondensation qui sont bien connues de l'homme de métier (par exemple : température, excès de glycol, acidité du milieu).

Les copolyesters sulfonés siliconés qui constituent l'objet de la présente invention peuvent être avantageusement utilisés pour le revêtement de films polyester et notamment de films en polytéréphatalate d'éthylèneglycol.

Les exemples suivants illustrent l'invention et montrent comment elle peut être mise en pratique.

### EXEMPLE N° 1

### 1°) Préparation d'un composé difonctionnel à motifs polysiloxanes

On a préparé un composé difonctionnel (A), de poids moléculaire 1400, répondant à la formule :

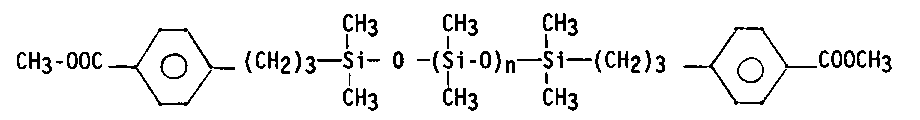

dans laquelle n est égal à 12,13, de la façon suivante :
Dans un ballon à 3 tubulures muni d'un agitateur, d'un condensateur et d'un thermomètre, on introduit 0,059 moles (67,88 g) d'une huile polydiméthylsiloxane à groupes hydrogénodiméthylsilyle terminaux comportant 12,13 motifs diméthylsilyloxy. Le contenu du ballon est porté à 80°C sous courant d'azote au moyen d'un bain d'huile, puis on introduit, sous agitation, 5 parties par million de platine par rapport à l'huile polysiloxanique puis, 0,118 moles (22,7 g) d'allylbenzoate de méthyle en 25 mn. La température de la masse réactionnelle est ensuite portée à 120° C en 15 mm ; on la maintient à cette température pendant 20 mn. Le dosage des fonctions Si H montre que la totalité de l'huile polysiloxane a réagi.

### 2°) Préparation d'un copolyester sulfoné siliconé

Dans un réacteur en acier inoxydable de 7,5 litres muni d'un agitateur à ancre, d'une double enveloppe pour la circulation d'un liquide caloporteur et d'une colonne de distillation régulée par une électrovanne, on introduit à froid :
- 1280 g (6,59 moles) de téréphtalate de diméthyle (DMT)
- 329 g (1,69 moles) d'isophtalate de diméthyle (DMI)
- 329 g (1,11 moles) de sodiumsulfo-5 isophtalate de diméthyle (DMIS Na)
- 80,23 g (0,05 moles) du composé difonctionnel (A)
- 1334 ml (23,86 moles) d'éthylène glycol
- 0,35 g d'aminotriéthanolate de titane comme catalyseur d'interéchange et de polycondensation.

L'agitation est mise en marche, puis le contenu du réacteur est porté rapidement à 182° C,température à laquelle le méthanol commence à distiller. La température dans le mélange réactionnel est alors amenée entre 220° C et 240° C en 45 minutes avec distillation de l'excès d'éthylèneglycol . La masse réactionnelle est alors transférée dans un autoclave chauffé à 250° C. La pression est réduite à 0,5 torr et la polycondensation est poursuivie pendant environ 50 minutes. Le polymère est ensuite coulé et refroidi. Il se présente sous la forme d'un solide écru qui est hydrodispersable dans l'eau.

On réalise ensuite les analyses suivantes :
1) Evaluation de la masse molaire par chromatographie par perméation de gel (GPC) dans la N - méthylpyrrolidone à 60°C. Les valeurs sont données en équivalents polystyrène.
2) Estimation de la teneur en motifs oxyéthylèniques par méthanolyse préalable du polymère et dosage par chromatographie en phase vapeur (CPV). Les résultats sont exprimés en pourcentage en poids par rapport au polymère.
3) Mesure du pourcentage en poids d'atome de silicium au moyen d'un appareil à fluorescence X.
4) Détermination des températures de transition vitreuse après conditionnement des échantillons à 33, 55 ou 65 % en humidité relative.

Les propriétés du copolyester (A) figurent dans les tableaux I à IV ci-après.

### EXEMPLE N° 2

On reproduit l'exemple n° 1 avec un oligomère polydiméthyl siloxane (B) de même formule que (A) mais avec n = 14,83, dont le poids moléculaire est d'environ 1600. Les quantités suivantes de réactifs ont été chargées :

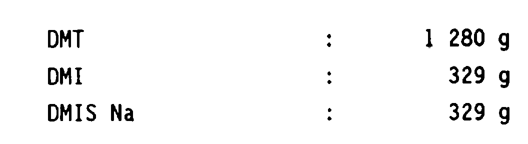

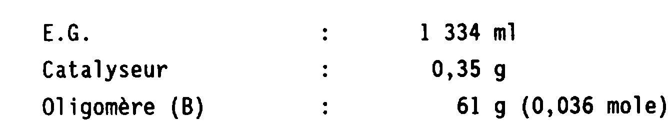

Les propriétés du copolyester (PB) ainsi obtenu figurent dans les tableaux I à IV ci-après.

### EXEMPLE N° 3

On reproduit ici l'exemple n° 2 en chargeant les quantités suivantes de réactifs :

| | |
|---|---|
| DMT : | 1 280 g |
| DMI : | 329 g |
| DMIS Na : | 329 g |
| E.G. : | 1 130 ml |
| Catalyseur : | 0,35 g |
| Composé (B) : | 61 g (0,036 mole) |

Les propriétés du copolyester (PB1) ainsi obtenu figurent dans les tableaux I à IV ci-après.

### EXEMPLE N° 4

On reproduit ici l'exemple n° 2 en introduisant deux fois moins de composé (B) :

| | |
|---|---|
| DMT : | 1 301 g (6,7 moles) |
| DMI : | 354 g (1,823 mole) |
| DMIS Na : | 334 g (1,127 mole) |
| E.G. : | 1 353 ml (24 moles) |
| Catalyseur : | 0,35 g |
| Composé (B) : | 30,50 g (0,0179 mole) |

Les propriétés du copolyester (PB2) ainsi obtenu figurent dans les tableaux I à IV ci-après.

### EXEMPLE N° 5

On opère comme à l'exemple n° 1 en mettant en oeuvre un composé polysiloxane (C) de formule analogue à celle de (A) mais dont n est égal à 13,72 et du diéthylèneglycol (DEG) dans le but de modifier sa viscoélasticité.

Les charges introduites sont les suivantes :

| | |
|---|---|
| DMT : | 1 280 g (6,6 moles) |
| DMI : | 330 g (1,7 mole) |
| DMIS Na : | 329 g (1,11 mole) |
| D.E.G. : | 952,5 g (8,98 moles) |
| E.G : | 620 ml (8,98 moles) |
| Catalyseur : | 0,35 g |
| Composé (C) : | 73,20 g (0,039 mole) |

Les propriétés du copolyester (PC) ainsi obtenu figurent dans les tableaux I et IV ci-après.

### EXEMPLE N° 6

On reproduit ici l'exemple n° 1 dans lequel (A) a été remplacé par (C) en augmentant la quantité de composé polysiloxane (C).

Les charges sont les suivantes :

| | |
|---|---|
| DMT : | 1 239 g (6,38 moles) |
| DMI : | 324,6 g (1,62 mole) |
| DMIS Na : | 320 g (1,08 mole) |
| E.G. : | 1 295 ml (22,95 moles) |
| Catalyseur : | 0,35 g |
| Composé (C) : | 145 g (0,099 mole) |

Les propriétés du copolyester (PCI) ainsi obtenu figurent dans les tableaux I à IV ci-après.

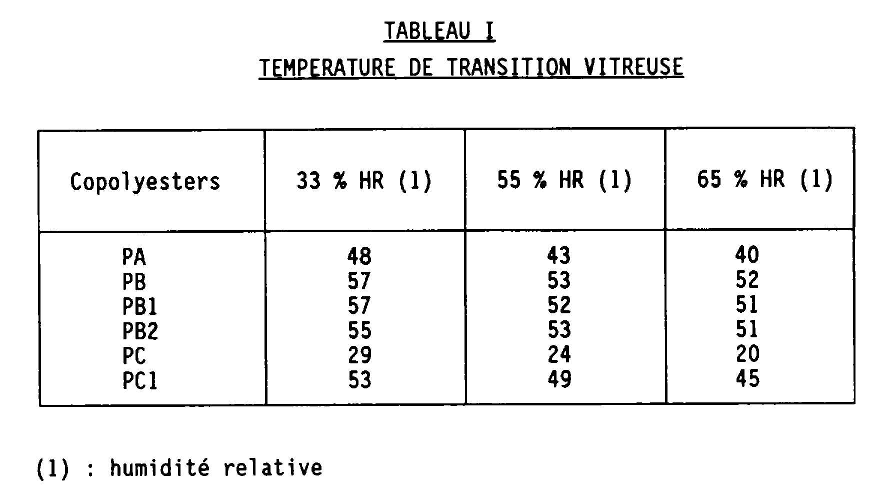

Tous les copolyesters présentent une Tg à - 100°C qui correspond à la phase polysiloxane.

**TABLEAU II**

| POIDS MOLECULAIRE | | | |
|---|---|---|---|
| | Mₙ | M_{w} | M_{z} |
| PAM | 21 380 | 46 240 | 68 240 |
| PB | 21 080 | 41 140 | 59 220 |
| PB1 | 20 470 | 41 520 | 59 510 |
| PB2 | 20 180 | 41 000 | 58 470 |
| PC | | | |
| PC1 | | | |

Ces valeurs ont été mesurées par GPC dans la NMP à 60°C

**TABLEAU III**

| TAUX EN SILICIUM | |
|---|---|
| POLYMERE | % Si dans le polymère |
| PA | 0,35 |
| PB | 0,32 |
| PB1 | 0,325 |
| PB2 | 0,15 |
| PC | 0,35 |
| PC1 | 0,8 |

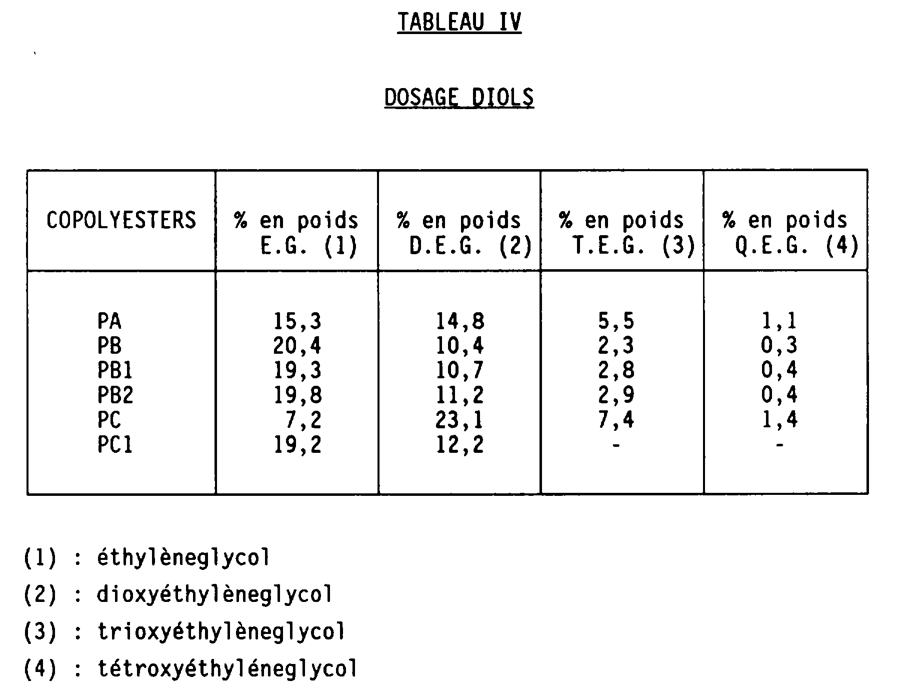

## Revendications

1. Copolyesters linéaires dispersables dans l'eau dérivés d'au moins un acide dicarboxylique et d'au moins un diol aliphatique et comportant une pluralité de motifs récurrents à groupes oxysulfonyles et de motifs siloxanes caractérisés en ce que :
a) le nombre de motifs récurrents à groupes oxysulfonyles est d'au moins 7, par rapport à 100 motifs récurrents dérivés d'acides dicarboxyliques non sulfonés et non silicones lorsque les motifs récurrents à groupes oxysulfonyles dérivent d'acides dicarboxyliques à groupes oxysulfonyles, ou par rapport à 100 motifs récurrents dérivés de diols non sulfonés et non silicones lorsque les motifs récurrents à groupes oxysulfonyles dérivent de diols à groupes oxysulfonyles
b) les motifs siloxanes répondent à la formule générale : 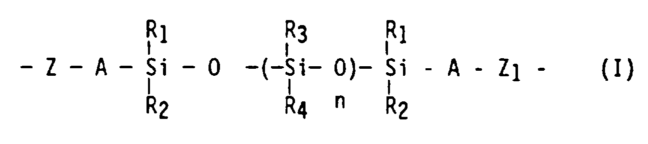 dans laquelle :
. R₁, R₂, R₃, R₄, identiques ou différents, représentent des radicaux alkyles, cycloalkyles, arylalkyles
. A est un radical hydrocarburé divalent lié à l'atome de silicium vicinal par une liaison carbone - silicium, exempt d'insaturation aliphatique et pouvant comporter un hétéro-atome pris dans le groupe formé par O, Si N.
. Z et Z₁ identiques ou différentes représentent les groupes fonctionnels divalents - O - et - 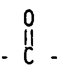
. n est un nombre entier ou fractionnaire compris entre 5 et 200.

2. Copolyesters linéaires sulfonés siliconés selon la revendication 1 caractérisés en ce qu'ils comportent une pluralité de groupes oxysulfonyle de formule générale :
-(SO3)ₙ₁M (II)
dans laquelle :
. n₁ est égal à 1 ou 2
. M représente un atome d'hydrogène, un métal alcalin ou alcalinoterreux, un cation ammonium, un cation ammonium quaternaire.

3. Copolyesters linéaires sulfonés siliconés selon l'une quelconque des revendications 1 à 2 caractérisés en ce que les motifs dérivés d'acides dicarboxyliques exempts de groupes oxysulfonyles qu'ils comportent sont constitués pour au moins 80 % en mole par des motifs dérivés d'acides dicarboxyliques aromatiques.

4. Copolyesters linéaires sulfonés siliconés selon la revendication 3 caractérisés en ce que les motifs dérivés d'acides dicarboxyliques aromatiques sont pris dans le groupe des motifs téréphtaltate, isophtalate, naphtalènedicarboxylates.

5. Copolyesters linéaires sulfonés siliconés selon l'une quelconque des revendications 1 à 4 caractérisés en ce qu'ils sont constitués pour au moins 50 % en moles de motifs dérivés de diols aliphatiques inférieurs par rapport au total des motifs dérivés de diols exempts de groupes oxysulfonyles et siloxanes.

6. Copolyesters linéaires sulfonés siliconés selon la revendication 5 caractérisés en ce que les motifs dérivés d'alcanediols inférieurs sont des motifs éthylèneoxy.

7. Copolyesters linéaires sulfonés siliconés selon l'une quelconque des revendications 1 à 6 caractérisés en ce qu'ils comportent de 7 à 20 % en moles de motifs récurrents à groupe oxysulfonyle rapporté au total des motifs récurrents de même nature non sulfonés et non siliconés.

8. Copolyesters linéaires sulfonés siliconés selon l'une quelconque des revendications 1 à 7 caractérisés en ce qu'ils comportent une pluralité de motifs récurrents à groupes oxysulfonyles dérivés de composés difonctionnels de formule générale : 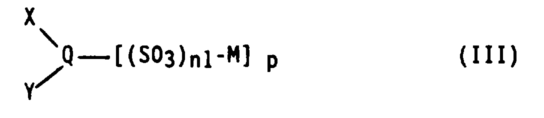 dans laquelle :
- M est n¹ ont la signification déjà donnée ;
- Q est un radical aromatique polyvalent ;
- X et Y sont des radicaux hydroxycarbonyle ou dérivés : esters d'alcools aliphatiques inférieur ou halogénures d'acides.

9. Copolyesters linéaires sulfonés siliconés selon la revendication 8 caractérisés en ce qu'ils présentent une pluralité de motifs dérivés des acides hydroxysulfonylisophtaliques ou de leurs esters et halogénures.

10. Copolyesters linéaires sulfonés siliconés selon la revendication 9 caractérisés en ce qu'ils présentent une pluralité de motifs dérivés de l'acide sodiumsulfo-5 isophtalique.

11. Copolyesters linéaires sulfonés siliconés selon l'une quelconque des revendications 1 à 10 caractérisés en ce qu'ils comportent un nombre de motifs de formule (I) tel que leur teneur pondérale en silicium est comprise entre 0,05 et 5 %.

12. Copolyesters linéaires sulfonés siliconés selon l'une quelconque des revendications 1 à 10 caractérisés en ce qu'ils sont constitués par 1% à 40% en poids de motifs polyoxyalkylènes de formule générale :
- [O - (CH₂)ₓ-_{]n2}
dans laquelle x représente un nombre entier de 2 à 4 et n2 un nombre entier de 2 à 10.

13. Copolyesters linéaires sulfonés siliconés selon la revendication 12 caractérisé en ce que les motifs polyoxyalkylènes sont des motifs polyoxyéthylènes.

14. Procédé d'obtention des copolyesters sulfonés siliconés selon l'une quelconque des revendications 1 à 13 caractérisé en ce que l'on fait réagir dans une première étape au moins un acide dicarboxylique ou ses dérivés conduisant à la formation d'ester avec au moins un glycol, au moins un composé difonctionnel générateur d'ester à groupe (s) oxysulfonyle (s) et au moins un composé difonctionnel de formule générale : 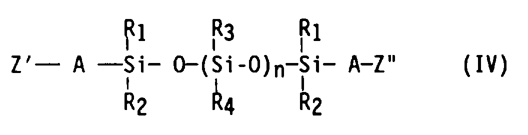 dans laquelle :
- R¹, R, R³, R⁴, A et n ont la signification donnée précédemment ;
- Z' et Z", identiques ou différents, représentent un groupe hydroxyle, un groupe hydroxycarbonyle, un groupe alkoxycarbonyle inférieur, un groupe halogénocarbonyle en présence d'un catalyseur usuel de transestérification ou d'estérification puis, dans une deuxième étape, on procède à la polycondensation des oligomères formés lors de la première étape en présence d'un catalyseur de polycondensation.

## Patentansprüche

1. Lineare, in Wasser dispergierbare Copolyester, die von wenigstens einer Dicarbonsäure und wenigstens einem aliphatischen Diol abgeleitet sind und eine Vielzahl von Wiederholungseinheiten mit Oxysulfonylgruppen und von Siloxaneinheiten enthalten, dadurch gekennzeichnet, daß
a) die Anzahl der Wiederholungseinheiten mit Oxysulfonylgruppen wenigstens 7 beträgt im Verhältnis zu 100 Wiederholungseinheiten, die von nicht sulfonierten und nicht silikonhaltigen Dicarbonsäuren abgeleitet sind, wenn die Wiederholungseinheiten mit Oxysulfonylgruppen sich von Dicarbonsäuren mit Oxysulfonylgruppen ableiten, oder im Verhältnis zu 100 Wiederholungseinheiten, die von nicht sulfonierten und nicht silikonhaltigen Diolen abgeleitet sind, wenn die Wiederholungseinheiten mit Oxysulfonylgruppen sich von Diolen mit Oxysulfonylgruppen ableiten.
b) die Siloxaneinheiten folgender allgemeiner Formel entsprechen: 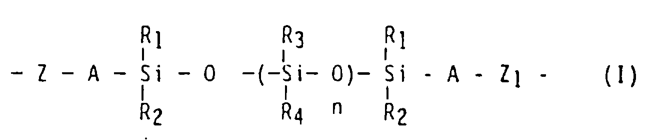
in der:
- R₁, R₂, R₃, R₄, gleich oder verschieden, für Alkyl-, Cycloalkyl-, Arylalkylgruppen stehen,
- A ein divalenter Kohlenwasserstoffrest ist, der mit einer Kohlenstoff-Siliciumbindung an das benachbarte Siliciumatom gebunden ist, der keine aliphatische Unsättigung aufweist und der ein Heteroatom aus der aus O, Si, N gebildeten Gruppe enthalten kann,
- Z und Z₁, gleich oder verschieden, für die divalenten funktionellen Gruppen -O- und 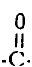 stehen,
- n eine ganze Zahl oder ein Bruch zwischen 5 und 200 ist.

2. Sulfonierte lineare Silikoncopolyester nach Anspruch 1, dadurch gekennzeichnet, daß sie eine Vielzahl von Oxysulfonylgruppen mit folgender allgemeiner Formel enthalten:
-(SO₃)ₙ₁ M (II)
in der:
- n₁ gleich 1 oder 2 ist
- M für ein Wasserstoffatom, ein Alkali- oder Erdalkalimetall, ein Ammoniumkation, ein quartäres Ammoniumkation steht.

3. Sulfonierte lineare Silikoncopolyester nach irgendeinem der Ansprüche 1 bis 2, dadurch gekennzeichnet, daß die von den Dicarbonsäuren abgeleiteten Teilstücke ohne Oxysulfonylgruppen, die sie enthalten, zu mindestens 80 Mol-% aus Einheiten bestehen, die von aromatischen Dicarbonsäuren abgeleitet sind.

4. Sulfonierte lineare Silikoncopolyester nach Anspruch 3, dadurch gekennzeichnet, daß die von aromatischen Dicarbonsäuren abgeleiteten Teilstücke zu der Gruppe der Terephthalsäure-, Isophthalsäure-, Naphthalindicarbonsäurereste gehören.

5. Sulfonierte lineare Silikoncopolyester nach irgendeinem der Ansprüche 1 bis 4, dadurch gekennzeichnet, daß sie zu wenigstens 50 Mol-% aus Teilstücken bestehen, die von niedrigen aliphatischen Diolen abgeleitet sind, im Verhältnis zur Gesamtzahl der von Diolen abgeleiteten Teilstücke ohne Oxysulfonyl- und Siloxangruppen.

6. Sulfonierte lineare Silikoncopolyester nach Anspruch 5, dadurch gekennzeichnet, daß die von niedrigen alkandiolen abgeleiteten Teilstücke Ethylenoxygruppen sind.

7. Sulfonierte lineare Silikoncopolyester nach irgendeinem der Ansprüche 1 bis 6, dadurch gekennzeichnet, daß sie 7 bis 20 Mol-% Wiederholungseinheiten mit einer Oxysulfonylgruppe enthalten, im Verhältnis zur Gesamtzahl der Wiederholungseinheiten gleicher Beschaffenheit, die nicht sulfoniert und nicht silikonhaltig sind.

8. Sulfonierte lineare Silikoncopolyester nach irgendeinem der Ansprüche 1 bis 7, dadurch gekennzeichnet, daß sie eine Vielzahl von Wiederholungseinheiten mit Oxysulfonylgruppen enthalten, die von bifunktionellen Verbindungen mit folgender allgemeiner Formel abgeleitet sind: 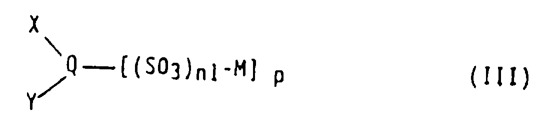 in der
- M und n₁ die schon angegebene Bedeutung haben,
- Q ein polyvalenter aromatischer Rest ist;
- X und Y Hydroxycarbonylreste oder Derivate sind: Ester niedriger aliphatische Alkohole oder Säurehalogenide.

9. Sulfonierte lineare Silikoncopolyester nach Anspruch 8, dadurch gekennzeichnet, daß sie eine Vielzahl von Teilstücken aufweisen, die von den Hydroxysulfonylisophthalsäuren oder von ihren Estern und Halogeniden abgeleitet sind.

10. Sulfonierte lineare Silikoncopolyester nach Anspruch 9, dadurch gekennzeichnet, daß sie eine Vielzahl von Teilstücken aufweisen, die von der 5-Natriumsulfoisophthalsäure abgeleitet sind.

11. Sulfonierte lineare Silikoncopolyester nach irgendeinem der Ansprüche 1 bis 10, dadurch gekennzeichnet, daß sie eine so große Anzahl von Teilstücken mit der Formel (I) enthalten, daß ihr gewichtmäßiger Gehalt an Silicium zwischen 0,05 und 5% liegt.

12. Sulfonierte lineare Silikoncopolyester nach irgendeinem der Ansprüche 1 bis 10, dadurch gekennzeichnet, daß sie zu 1 bis 40 Gew.% aus Polyoxyalkyleneinheiten mit folgender allgemeiner Formel bestehen:
-[O-(CH₂)ₓ-]ₙ₂
in der x für eine ganze Zahl von 2 bis 4 und n₂ für eine ganze Zahl von 2 bis 10 steht.

13. Sulfonierte lineare Silikoncopolyester nach Anspruch 12, dadurch gekennzeichnet, daß die Polyoxyalkyleneinheiten Polyoxyethylengruppen sind.

14. Verfahren zur Herstellung der sulfonierten Silikoncopolyester nach irgendeinem der Ansprüche 1 bis 13, dadurch gekennzeichnet, daß man in einem ersten Schritt wenigstens eine Dicarbonsäure oder ihre Derivate, die zur Bildung eines Esters führen, mit wenigstens einem Glykol, wenigstens einer bifunktionellen estererzeugenden Verbindung mit Oxysulfonylgruppe(n) und wenigstens einer bifunktionellen Verbindung mit folgender alilgemeiner Formel reagieren läßt: 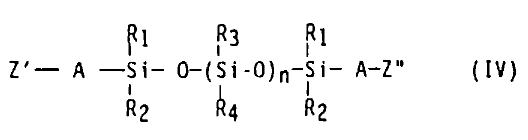 in der
- R₁, R₂, R₃, R₄, A und n die vorher angegebene Bedeutung haben,
- Z' und Z'', gleich oder verschieden, für eine Hydroxylgruppe, eine Hydroxycarbonylgruppe, eine niedrige Alkoxycarbonylgruppe, eine Halogencarbonylgruppe steht, und zwar in Gegenwart eines gewöhnlichen Umesterungs- oder Veresterungskatalysators, daß man dann in einem zweiten Schritt zur Polykondensation der im ersten Schritt gebildeten Oligomere übergeht, und zwar in Gegenwart eines Polykondensationskatalysators.

## Claims

1. Water-dispersible linear copolyesters derived from at least one dicarboxylic acid and at least one aliphatic diol and containing a plurality of recurring units with oxysulphonyl groups and of siloxane units, characterized in that :
a) the number of recurring units with oxysulphonyl groups is at least 7, relative to 100 recurring units derived from nonsulphonated and nonsiliconized dicarboxylic acids when the recurring units with oxysulphonyl groups derive from dicarboxylic acids with oxysulphonyl groups, or relative to 100 recurring units derived from nonsulphonated and nonsiliconized diols when the recurring units with oxysulphonyl groups derive from diols with oxysulphonyl groups and
b) the siloxane units correspond to the general formula: 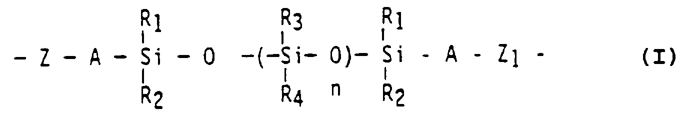
in which:
R₁, R₂, R₃ and R₄, which may be identical or different, represent alkyl, cycloalkyl or arylalkyl radicals,
A is a divalent hydrocarbon radical linked to the vicinal silicon atom by a carbon-silicon bond, which radical is free from aliphatic unsaturation and may contain a heteroatom from the group consisting of O, Si and N,
Z and Z₁, which may be identical or different, represent the divalent functional groups -O- and 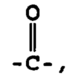 and n is an integral or fractional number between 5 and 200.

2. Siliconized sulphonated linear copolyesters according to Claim 1, characterized in that they contain a plurality of oxysulphonyl groups of the general formula:
- (SO₃)ₙ₁ M (II)
in which:
n₁ is equal to 1 or 2 and
M represents a hydrogen atom, an alkali metal or alkaline earth metal, an ammonium cation or a quaternary ammonium cation.

3. Siliconized sulphonated linear copolyesters according to either of Claims 1 and 2, characterized in that the units derived from dicarboxylic acids free from oxysulphonyl groups which they contain consist to the extent of at least 80 mol% of units derived from aromatic dicarboxylic acids.

4. Silizonized sulphonated linear copolyesters according to Claim 3, characterized in that the units derived from aromatic dicarboxylic acids are chosen from the group of terephthalate, isophthalate and naphthalenedicarboxylate units.

5. Siliconized sulphonated linear copolyesters according to any one of Claims 1 to 4, characterized in that they consist to the extent of at least 50 mol% of units derived from lower aliphatic diols, relative to the total of the units derived from diols free from oxysulphonyl and siloxane groups.

6. Siliconized sulphonated linear copolyesters according to Claim 5, characterized in that the units derived from lower alkanediols are ethyleneoxy units.

7. Siliconized sulphonated linear copolyesters according to any one of Claims 1 to 6, characterized in that they contain from 7 to 20 mol% of recurring units having an oxysulphonyl group, relative to the total of nonsulphonated and nonsiliconized recurring units of the same nature.

8. Siliconized sulphonated linear copolyesters according to any one of Claims 1 to 7, characterized in that they contain a plurality of recurring units having oxysulphonyl groups, derived from difunctional compounds of general formula: 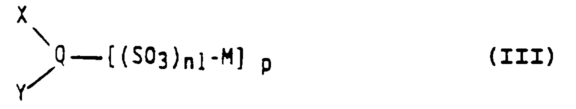 in which:
- M and n1 have the meaning already given;
- Q is a polyvalent aromatic radical;
- X and Y are hydroxycarbonyl radicals or derivatives: esters of lower aliphatic alcohols, or acid halides.

9. Siliconized sulphonated linear copolyesters according to Claim 8, characterized in that they have a plurality of units derived from hydroxysulphonylisophthalic acids or from their esters and halides.

10. Siliconized sulphonated linear copolyesters according to Claim 9, characterized in that they have a plurality of units derived from 5-sodiumsulpho-isophthalic acid.

11. Siliconized sulphonated linear copolyesters according to any one of Claims 1 to 10, characterized in that they contain a number of units of formula (I) which is such that their weight content of silicon is between 0.05 and 5 %.

12. Siliconized sulphonated linear copolyesters according to any one of Claims 1 to 10, characterized in that they consist to the extent of 1 % to 40 % by weight of polyoxyalkylene units of general formula:
-[O-(CH₂)ₓ-]ₙ₂
in which x represents an integer from 2 to 4 and n2 an integer from 2 to 10.

13. Siliconized sulphonated linear copolyesters according to Claim 12, characterized in that the polyoxyalkylene units are polyoxyethylene units.

14. Process for obtaining siliconized sulphonated copolyesters according to any one of Claims 1 to 13, characterized in that, in a first stage, at least one dicarboxylic acid or its derivatives leading to ester formation is reacted with at least one glycol, at least one difunctional compound which generates an ester having one or more oxysulphonyl group(s) and at least one difunctional compound of general formula: 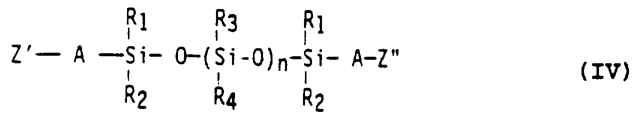 in which:
R₁, R₂, R₃, R₄, A and n have the meaning given above and
Z' and Z'', which may be identical or different, represent a hydroxyl group, a hydroxycarbonyl group, a lower alkoxycarbonyl group or a halocarbonyl group, in the presence of a conventional transesterification or esterification catalyst after which, in a second stage, the polycondensation of the oligomers formed during the first stage is carried out in the presence of a polycondensation catalyst.
